# EUROPEAN PATENT SPECIFICATION

(11) **EP 4 267 902 B1**
(45) Date of publication and mention of the grant of the patent: **11.09.2024**
(21) Application number: 21840141.2
(22) Date of filing: 17.12.2021
(51) Int. Cl.: F28D 9/00, F01M 1/00, F28F 19/01, F28D 21/00

(54) **OIL TEMPERATURE REGULATION ASSEMBLY**
ÖLTEMPERATURREGELUNGSANORDNUNG
ENSEMBLE DE RÉGULATION DE TEMPÉRATURE D'HUILE

(30) Priority: 23.12.2020 IT 202000032090; 23.12.2020 IT 202000032120
(43) Date of publication of application: 01.11.2023
(73) Proprietor: Ufi Filters s.p.a., 46047 Porto Mantovano (Mantova) (IT)
(72) Inventor: GIRONDI, Giorgio, 46047 Porto Mantovano (Mantova) (IT)
(74) Representative: Gamba, Alessandro
(86) International application number: PCT/IB2021/061925
(87) International publication number: WO 2022/137055

(56) References cited:
- EP-A1- 1 493 903
- EP-B1- 1 780 384
- WO-A1-2020/212894
- KR-B1- 101 188 226
- US-A1- 2012 273 179
- US-A1- 2013 180 496
- US-A1- 2014 102 682
- US-A1- 2015 101 781
- US-A1- 2019 316 499
- US-A1- 2020 317 032
- US-B2- 10 138 771
- US-B2- 8 839 748

## Description

### Field of application

This invention relates to an oil temperature regulator assembly.

In particular, this invention is in the automotive field.

The oil temperature regulator assembly that is the subject of this invention finds, in effect, specific application in a vehicle, for example, in order to regulate the temperature of the oil circulating in an oil circulation system of said vehicle. Going into further detail, the oil temperature regulator assembly is mountable on an operating group of a vehicle to be fluidly connected to the oil circulation system of said operating group.

Specifically, an operating group refers to a component or group of components in which an oil circulation system is provided, such as a power group and/or a drive group and/or a gearbox group.

In addition, the oil temperature regulator assembly of this invention is also fluidly connectable to a water system of the vehicle, or generally to a cooling system in which a cooling fluid, preferably a typically water-based coolant, flows.

### Prior art

In the state of the art, solutions for oil temperature regulator assemblies are known which are connectable to an oil circulation system and a cooling system in which cooling fluid, for example water or a water-based fluid, circulates. Said known temperature regulator assemblies comprise a plate heat exchanger adapted to perform oil temperature regulation operations by heat exchange with the cooling fluid.

However, these solutions have particularly complex geometries and layouts, with particular reference to the presence and connection of specific oil circulation ducts and cooling ducts.

In the solutions of the prior art, greater complexity of said geometries and said layouts corresponds to greater costs of production and manufacture.

In addition, in the solutions of the prior art, greater complexity of these layouts corresponds to specific difficulties in positioning the oil temperature regulator assembly inside the vehicle: in the automotive sector, after all, the need to use as little space as possible is still particularly felt. Examples of said know solutions are disclosed in documents US 2019/316499, which discloses the features of the preamble of claim 1, and US2014/102682A1, KR101188226B1, EP1493903A1 and US2012/273179A1.

### Solution of the invention

Therefore, there is a strong need to provide an oil temperature regulator assembly that solves these problems.

The object of this invention is to provide an oil temperature regulator assembly that performs oil temperature regulation operations effectively, i.e., such that a predetermined amount of oil having very precise physical features is transferred to the operating group connected thereto, which has a geometry and layout of the ducts that is as simple as possible.

This object is achieved by the oil temperature regulator assembly claimed in claim 1. The claims dependent thereon describe preferred embodiment variants involving further advantageous aspects.

### Description of the drawings

Further features and advantages of the invention will become clear from the description given below of its preferred embodiments as non-limiting examples, in reference to the attached figures, wherein:
- Fig. 1a and 1b show, respectively, a top and bottom perspective view in separate parts of the oil temperature regulator assembly of this invention, according to a first preferred embodiment;
- Fig. 2 shows a perspective view of assembled parts of the oil temperature regulator assembly shown in Fig. 1a and 1b;
- Fig. 3 shows a perspective view of the assembled parts of the oil temperature regulator assembly shown in Fig. 1a and 1b, with the filtering unit removed;
- Fig. 4' and 4" show a bottom and top view of the oil temperature regulator assembly in Fig. 2;
- Fig. 5 shows a sectional view of the oil temperature regulator assembly along the A-A section plane in Fig. 4';
- Fig. 6a and 6b show two schematic sectional views of the oil temperature regulator assembly according to two further embodiments.

### Detailed description

With reference to the accompanying figures, an oil temperature regulator assembly according to this invention is indicated with the numeral 1.

In particular, the regulator assembly of this invention, as broadly described below, is mountable to an operating group of a vehicle. Preferably, said operating group is a power group, for example an internal combustion engine or an electric combustion engine or a hybrid engine, or a drive group or a gearbox group.

According to this invention, in effect, the oil temperature regulator assembly 1 that is the subject of this invention is fluidly connectable with an oil circulation system of said operating group and with a cooling system of said operating group or of said vehicle.

According to this invention, moreover, as shown in a non-limiting manner in the accompanying figures, the oil temperature regulator assembly 1 defines a vertical axis V-V and two longitudinal axes X-X, Y-Y. In particular, the two longitudinal axes X-X, Y-Y lie on the same imaginary plane which is orthogonal to the vertical axis V-V.

Preferably, in the description provided hereinafter, when referring to planar position or elements, the intended meaning is with respect to said longitudinal axes, i.e., with respect to the imaginary plane on which said elements are housed. In other words, said components have extension substantially parallel to the plane in which the longitudinal axes X-X, Y-Y lie. Similarly, in the description provided hereinafter, when referring to superpositions, heights, and vertical extensions, reference is made to the direction parallel or coincident with the vertical axis V-V, thus orthogonal to the longitudinal axes X-X, Y-Y.

It should be noted that in this description, the use of the terms "upper" and "lower" specifically refers to the accompanying figures, but in no way limits the use of the oil temperature regulator assembly 1 or its positioning within a vehicle.

According to this invention, the oil temperature regulator assembly 1 comprises a heat exchanger 2.

The heat exchanger 2 comprises, along said vertical axis V-V, an upper exchanger plate 21, a plurality of intermediate exchanger plates 20 and a lower exchanger plate 22. In other words, said plates are stacked on each other along the vertical axis V-V.

According to a preferred embodiment, the upper exchanger plate 21 and the lower exchanger plate 22 are adapted to sandwich the plurality of intermediate exchanger plates 20 together.

According to this invention, the stacking of said plates defines an oil flow zone and a cooling fluid flow zone comprising, respectively, a plurality of planar oil flowing regions 40 and a plurality of planar fluid flowing regions 60 alternating with each other along the vertical axis V-V and comprising, respectively, vertical oil inlet and outlet ducts 41, 42, and vertical fluid inlet and outlet ducts 61, 62, fluidly connected to respective planar flowing regions 40, 60.

According to a preferred embodiment, the oil flow zone comprises two vertical oil inlet and outlet ducts 41, 42.

According to a preferred embodiment, the cooling fluid flow zone comprises two vertical fluid inlet and outlet ducts 61, 62.

This invention is not limited to the position of vertical oil ducts 41, 42 with respect to longitudinal directions.

According to a preferred embodiment, the vertical oil ducts 41, 42 are mutually positioned aligned with respect to a longitudinal axis.

Similarly, this invention is not limited to the position of vertical fluid ducts 61, 62 with respect to the longitudinal directions.

According to a preferred embodiment the vertical fluid ducts 61, 62 are mutually positioned aligned with respect to a longitudinal axis.

In other words, the exchanger plates are specifically shaped to vertically align a plurality of specific through openings in such a way as to define vertical ducts.

In other words, the exchanger plates are specifically shaped to define specific planar, i.e., longitudinal, passages therebetween.

According to this invention, the oil temperature regulator assembly 1 comprises a base device 3 engaged to the lower exchanger plate 22, preferably adapted to be mountable to the operating group. According to a preferred embodiment, the base device 3 allows the mounting and fastening of the heat exchanger 2 to the operating group of a vehicle.

According to a preferred embodiment, the base device 3 comprises a plurality of holes for fastening to the component on which said device is mounted.

According to a preferred embodiment, the base device 3 comprises a plurality of holes for fastening to the operating group of the vehicle.

Preferably, the base device 3 carries out the fluid connection with the heat exchanger 2. In particular, the base device 3 is adapted to carry out the fluid connection of the oil heat exchanger 2 of the operating group.

Preferably, the base device 3 carries out both the fluid connection and fastening of the thermal regulator assembly 1 to the vehicle operating group.

According to an embodiment, the base device 3 comprises inlet and outlet oil connection mouths 31, 32, respectively, fluidly connected with vertical oil inlet and outlet ducts 41, 42, suitable for fluidly connecting the heat exchanger 2 with the vehicle operating group.

According to a preferred embodiment, the inlet and outlet oil connection mouths 31, 32 are positioned vertically below the heat exchanger 2.

According to a variant embodiment, the inlet and outlet oil connection mouths 31, 32 are, at least one, positioned vertically outside the heat exchanger 2, in other words, beyond the footprint of the heat exchanger 2.

According to a preferred embodiment, the oil temperature regulator assembly 1 comprises fluid connection mouths adapted to connect vertical fluid ducts to the cooling system into which cooling fluid flows.

According to a preferred embodiment, said fluid connection mouths are comprised in the upper exchanger plate 21.

According to a preferred embodiment, said fluid connection mouths are comprised in the base device 3.

According to a preferred embodiment, the base device 3 comprises a lower plate-shaped base element 30 and an upper plate-shaped base element 34, which are vertically coupled.

According to the invention, the coupling between a lower plate-shaped base element 30 and an upper plate-shaped base element 34 defines a main oil circulation duct 39.

Preferably, the oil connection mouths 31, 32 are formed in the main oil circulation duct 39.

According to a preferred embodiment, vertical oil ducts 41, 42 are fluidly connected to said main oil circulation duct 39.

According to a preferred embodiment, said main oil circulation duct 39 extends longitudinally, preferably along the longitudinal axis Y-Y, orthogonally to the other longitudinal axis X-X.

According to a preferred embodiment, said main oil circulation duct 39 extends along a U-shaped path.

According to a preferred embodiment, the lower plate-shaped base element 30 and the upper plate-shaped base element 34 are vertically coupled, such that an auxiliary oil circulation duct 35 is also defined.

Preferably, the auxiliary oil circulation duct 35 is at least partially surrounded by the main oil duct 39.

Preferably, the auxiliary oil circulation duct 35 is housed in the main oil circulation duct 39.

Preferably, the auxiliary oil circulation duct 35 connects a vertical oil duct 41, 42 with a connection mouth 31, 32, and the main oil circulation duct 39 connects the other vertical oil duct 41, 42 with the other connection mouth 31, 32, whereby within the main circulation duct 39 a fluid inlet portion and a distinct fluid outlet portion are defined.

Preferably, according to a preferred embodiment, the auxiliary oil circulation duct 35 allows oil to enter the heat exchanger 2, while the main oil circulation duct 39 allows oil to exit the heat exchanger 2.

In other words, in the main oil circulation duct 39 the two oil connection mouths 31, 32 are distinctly connected with the respective vertical oil ducts 41, 42.

According to a preferred embodiment, the lower plate-shaped base element 30 and the upper plate-shaped base element 34 are shaped to comprise respectively a main protrusion 38 and an auxiliary protrusion 36, wherein said auxiliary protrusion 36 is adapted to be housed in the main protrusion 38. Preferably, therefore, the auxiliary protrusion 36 is surrounded at least in part, preferably in its entirety, by the space subtended in the main protrusion 38.

Preferably, the main protrusion 38 houses the main oil circulation duct 39.

Preferably, the auxiliary protrusion 36 houses the auxiliary oil circulation duct 35.

According to a preferred embodiment, the lower plate-shaped base element 30 and the upper plate-shaped base element 34 are obtained from respective cut and drawn metal sheets. In other words, the lower plate-shaped base element 30 and the upper plate-shaped base element 34 are two plates subject to hot and/or cold plastic deformation operations.

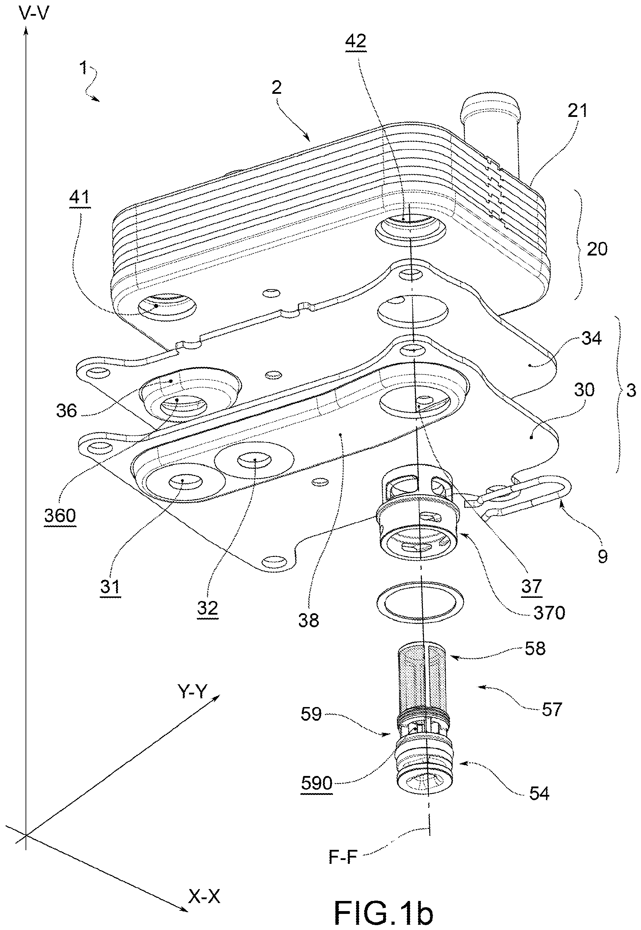

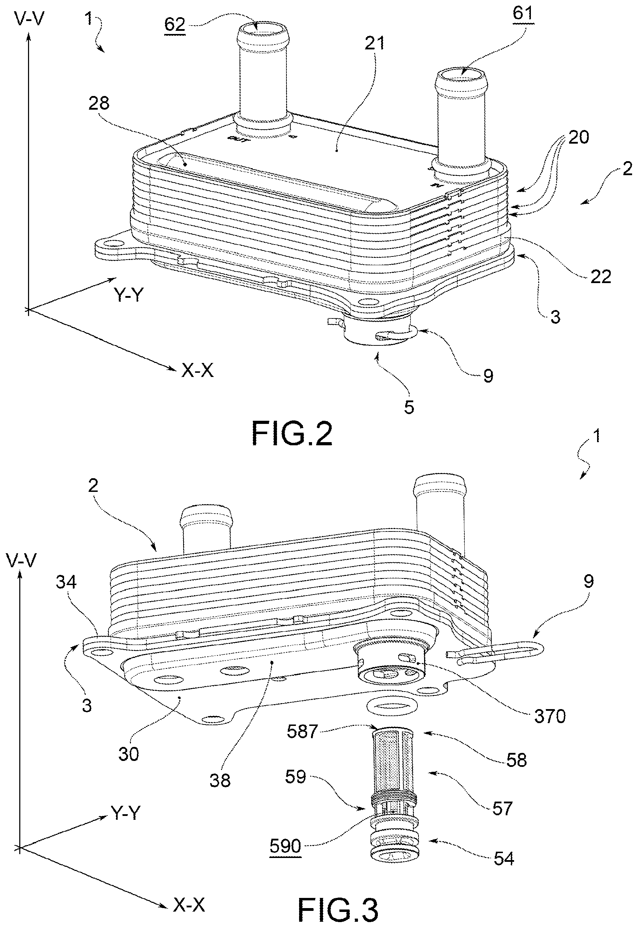

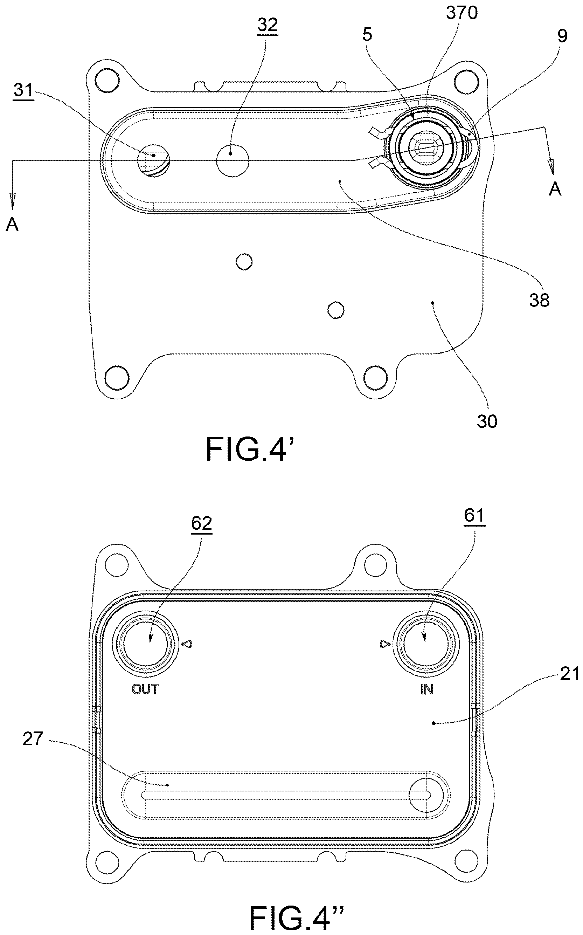

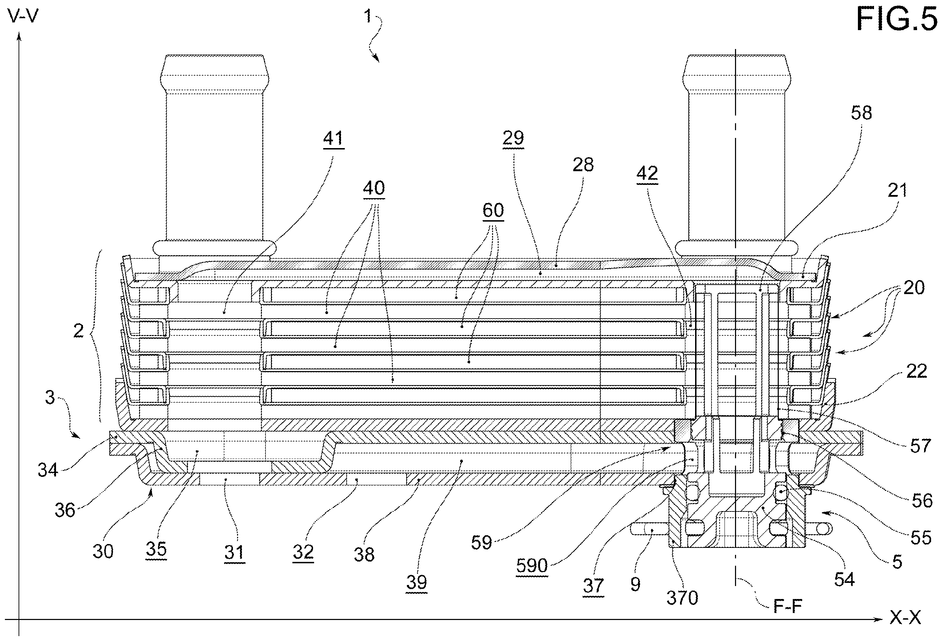

According to a preferred embodiment, the oil connection mouths 31, 32 are positioned proximal to each other. Preferably, such an advantageous embodiment is shown by way of example in the accompanying figures, in particular in Fig. 1 to 5.

According to a preferred embodiment, the auxiliary protrusion 36 comprises a passage opening 360 fluidly connected to an oil connection mouth 31 formed on the main protrusion 38 and fluidly connected to a vertical oil duct 41.

According to a preferred embodiment, the oil connection mouth, the auxiliary protrusion, and the vertical oil duct are axially and vertically aligned.

According to a further preferred embodiment, the oil connection mouth, the auxiliary protrusion, and the vertical oil duct are axially and vertically offset.

According to a preferred embodiment, the heat exchanger 2 comprises a bypass duct 29 fluidly connected to the vertical oil ducts 41, 42, wherein oil flows, bypassing the planar flowing regions 40.

In other words, preferably the bypass duct 29 is adapted to fluidly connect the vertical oil ducts 41, 42 to be fluidly penetrated by the oil rather than said oil flowing into the planar flowing regions 40. For example, this operating situation occurs with particularly cold, and therefore very viscous, oil.

According to a preferred embodiment, the bypass duct 29 is at least partially defined by the upper exchanger plate 21 which comprises a bypass protrusion 28.

Preferably, the upper exchanger plate 21 is shaped to comprise a bypass protrusion 28 in which the bypass duct 29 is defined.

Preferably, hereinafter the main oil circulation duct and the bypass duct will be referred to only by the generic terminology of oil circulation duct(s).

According to a preferred embodiment, wherein the upper exchanger plate 21 or the base device 3 comprises an operating opening 27, 37 vertically aligned with a vertical oil duct 41, 42.

According to the accompanying figures, Fig. 1 to 5 show embodiments, wherein the base device 3 comprises the operating opening 37.

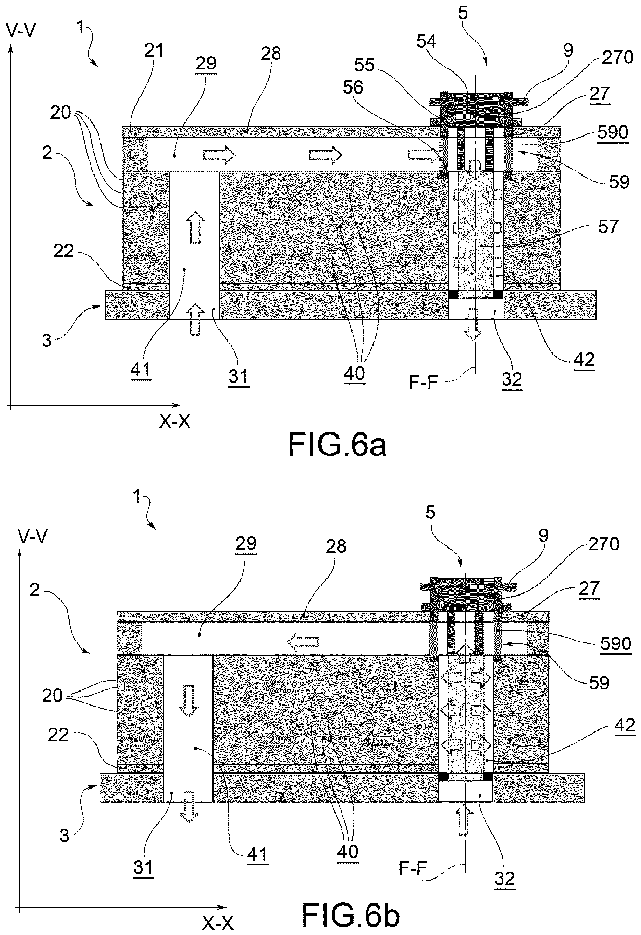

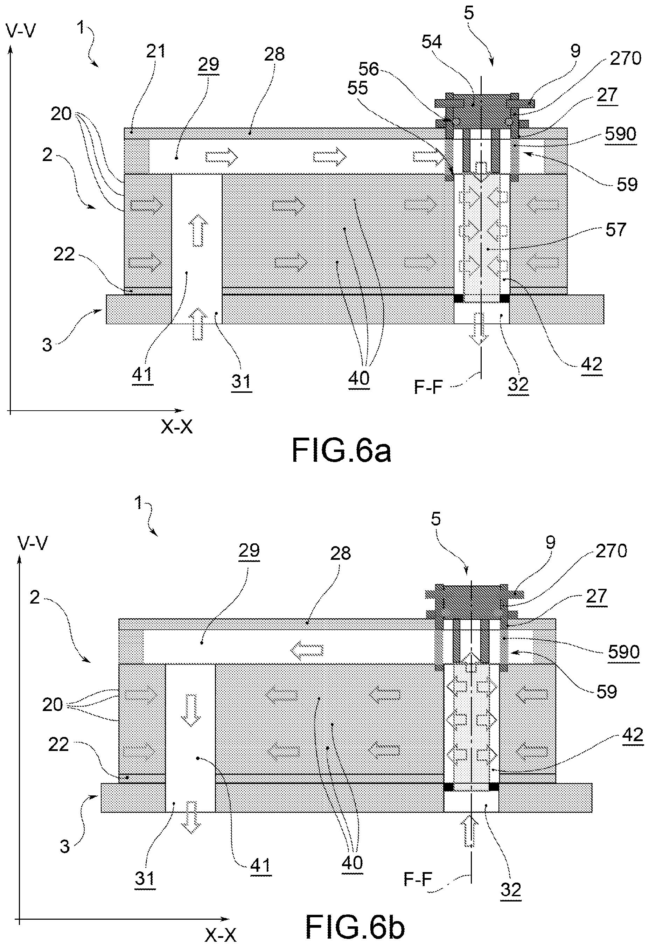

According to the accompanying figures, Fig. 6a and 6b show embodiments, wherein the upper exchanger plate 21 comprises the operating opening 27.

According to a preferred embodiment, the oil temperature regulator assembly 1 further comprises a filtering unit 5 extending along a filter axis F-F insertable as a cartridge through the operating opening 27, 37 into the vertical oil duct 41, 42.

Said filtering unit 5 comprises a filtering element 57 adapted to filter oil from solid particles.

In other words, by means of the filtering unit 5 the oil is not only subjected to specific operations for regulating its temperature but also to filtration operations.

Preferably, the oil is then delivered to the operating group at a desired temperature and also filtered of unwanted solids.

According to a preferred embodiment, the filtering element 57 extends in a tubular manner with respect to the filter axis F-F, being adapted to carry out the filtration in a radial direction, preferably from the outside to the inside, defining a dirty side and a clean side.

According to a preferred embodiment, the filtering unit 5 comprises a filter end 58 which is distal from the operating opening 27, 37, transverse to the filter axis F-F.

According to a preferred embodiment, the filter end 58 is closed.

According to a variant embodiment, the filter end 58 comprises a filtering end 587 adapted to carry out the filtration in the axial direction.

According to a preferred embodiment, the filtering element 57, and preferably the filtering end 587, comprises a filtering mesh.

According to a preferred embodiment, said filtering mesh has flow pores of a size equal to or less than 600 microns.

According to a preferred embodiment, the filtering mesh is made of synthetic material or metal material.

In other words, the filtering element 57 is fluidically crossable while forming a barrier to the suspended particles.

According to the invention, the operating opening 27, 37 is connected to the oil circulation duct 29, 39.

Preferably, therefore, the filtering unit 5 penetrates the oil circulation duct 29, 39 comprising a main sealing portion 56 that sealingly engages an inner portion of the vertical oil duct 41, 42 wherein is housed preferably the upper exchanger plate 21 or the lower exchanger plate 22.

According to the invention, the filtering unit 5 comprises a connecting portion 59 adapted to be housed in the oil circulation duct 29, 39 comprising a connecting opening 590 through which the vertical oil duct, preferably the clean side, and the oil circulation duct 29, 39 are in fluid communication.

Preferably, the connecting opening 590 is positioned radially relative to the filter axis F-F.

Preferably, the connecting opening 590 comprises a plurality of angularly equidistant fluid passages.

According to a preferred embodiment, the filtering unit 5 comprises an operating sealing portion 55 that sealingly engages the operating opening 27, 37.

Preferably, the main sealing portion 56 and the operating sealing portion 55 comprise annular sealing elements, such as O-rings.

In other words, the connecting portion 59 is housed in the oil circulation duct 29, 39, axially delimited by the two sealing portions 55, 56.

According to a preferred embodiment, the upper exchanger plate 21 or the base device 3 comprises a collar 270, 370 that extends vertically at the operating opening 27, 37.

According to a preferred embodiment, said collar also extends vertically within the oil circulation duct 29, 39 providing specific fluid openings adapted to allow the flow of oil.

According to said preferred embodiment, the filtering unit 5 comprises a fastening portion 54 adapted to engage and lock said collar 270, 370.

According to a preferred embodiment, the fastening portion 54 comprises said operating sealing portion 55.

According to a preferred embodiment, the fastening portion 54 engages the collar walls 270, 370. Preferably, the engagement involves screwing or snapping, or rototranslation between the parts.

Preferably, in a preferred embodiment, the oil temperature regulator assembly 1 further comprises a pin element 9 insertable in a radial direction through the collar 270, 370 and the fastening portion 54.

According to a preferred embodiment, the filtering unit 5 comprises a support structure comprising the fastening portion 54, the main sealing portion 56 and a support structure for supporting the filtering material, in particular the filtering mesh.

According to a preferred embodiment, the supporting structure is hollow.

According to a preferred embodiment, the support structure comprises one or more openings through which oil flows in filtration. Preferably on at least said opening there is a filtering material, preferably in the form of a mesh.

According to a preferred embodiment, the support structure is made of a single component.

According to a preferred embodiment, the support structure is made of plastics material.

According to a preferred embodiment, the filtering unit 5 comprises a support structure comprising the fastening portion 54, the main sealing portion 56, the connecting portion 59 and a support structure for supporting the filtering material, in particular the filtering mesh.

Preferably, the connecting portion 59 is axially positioned along the axis F-F between the fastening portion 54 and the main sealing portion 56.

According to a preferred embodiment, said plate-shaped elements are made of metal, preferably they are made of aluminum alloy or other alloys that may be machined by a brazing process.

In other words, the plate-shaped elements of the heat exchanger 2 and/or the base device 3 are integrally joinable together by a brazing operation, preferably in an autoclave.

Further embodiments of the oil temperature regulator assembly equipped with the aforesaid features in combination are envisaged.

A further preferred embodiment, comprising the main oil circulation duct 39 within the base device 3, comprises a suitable bypass opening adapted to allow a fluid passage for the oil that does not provide for transit through the heat exchanger 2. For example, this bypass opening allows direct return to the vehicle operating group without passing through the exchanger.

Innovatively, the oil temperature regulator assembly largely fulfills the object of this invention by overcoming problems typical of the prior art.

Advantageously, the oil temperature regulator assembly has a particularly simple layout in its "fluid part" and in its fluid connections with the respective operating group.

Advantageously, the regulating assembly is adapted to introduce into the oil circuit a quantity of oil with certain features, in terms of temperature and cleanliness.

Advantageously, the base device fulfills its purpose by being compact and easy to manufacture and assemble.

Advantageously, the base device makes it possible to fasten the filtration assembly to the operating group of the vehicle and at the same time achieves the fluid connection between the two components.

Advantageously, the base device is formed by suitably shaped and coupled plate-shaped elements in such a way as to have high mechanical strength, but at the same time being very light, making the thermal regulation assembly suitable for both vehicles powered by internal combustion engines and hybrid or electric powered vehicles.

Advantageously, the base device is made from formed plate-shaped elements comprising corresponding protrusions extending in the same main direction, e.g. vertical, simplifying the geometry of individual elements as well as the production processes of said elements and the assembly of the regulation assembly.

Advantageously, the base device is made from formed plate-shaped elements comprising protrusions and contact portions, substantially planar, ensuring adequate coupling between said plate-shaped elements at the contact regions provided to delimit passage openings and/or circulation channels. In other words, the base device is extremely reliable and resistant, minimizing the risk of any leakage at the contact regions between plate-shaped elements.

Advantageously, the base device is made from suitably formed plate-shaped elements ensuring the fluid coupling of the thermal regulating assembly to the vehicle operating group for different layouts, in particular also in the case of connection mouths positioned in proximity to each other.

Advantageously, the base device is made from suitably formed plate-shaped elements, allowing the integration of inlet and outlet circulation ducts of suitable section in the base device and limiting the height of said base device.

Advantageously, the base device is made from suitably formed plate-shaped elements, allowing the integration of circulation ducts with linear or curvilinear development, or which extend beyond the footprint of the exchanger.

Advantageously, the filtering unit is easy to insert and easy to replace.

Advantageously, the filtering unit has simplified geometry.

Advantageously, the filtering unit does not affect the pressure drop of the flowing oil.

Advantageously, the filtering unit is easily housable inside vertical oil ducts, ensuring fluid-dynamic coupling even with connection mouths that are offset with respect to the filter axis and/or the axis of the vertical duct.

Advantageously, the filtering unit is easily housable inside vertical oil ducts ensuring fluid-dynamic coupling of the dirty side and/or the clean side with circulation channels oriented transversally with respect to the filter axis.

Advantageously, the filtering unit has a structure that allows the insertion of the filtering portion inside the vertical duct even when the operating opening is not positioned near the vertical duct, maximizing the use of the available space even for the positioning of the circulation ducts in the base device and/or in the upper plate.

Advantageously, the filtering unit is easily integrable into a vertical oil duct of the exchanger, intercepting both the flow of oil circulating in the planar flowing regions of the exchanger and the flow of oil circulating in the bypass branch, always ensuring an adequate level of protection to the vehicle operating group and to the components installed on the oil circulation system in the various operating configurations.

Advantageously, the filtering unit is replacable with a plug, and the heat exchanger still fully fulfills its function as a thermal regulator.

Advantageously, the oil temperature regulator assembly is designable as required, e.g., to the necessary size and position of the ducts.

Advantageously, the oil temperature regulator assembly ensures a high maximization of space utilization in the vehicle. Advantageously, the oil temperature regulator assembly is particularly flexible in its application, for example allowing the designer to make full use of free space in the vehicle.

It is clear that a person skilled in the art may make changes to the oil temperature regulator assembly described above in order to meet contingent needs, all falling within the scope of protection as defined in the following claims.

### List of reference numbers:

1 oil temperature regulator assembly
2 heat exchanger
21 upper exchanger plate
20 intermediate exchanger plates
22 lower exchanger plate
27 operating opening
270 collar
28 bypass protrusion
29 bypass duct
3 base device
30 lower plate-shaped base element
31, 32 oil connection mouths
34 upper plate-shaped base element
35 auxiliary oil circulation duct
36 auxiliary protrusion
37 operating opening
370 collar
38 main protrusion
39 main oil circulation duct
5 filtering unit
54 fastening portion
55 operating sealing portion
56 main sealing portion
57 filtering element
58 filter end
587 filtering end
59 connecting portion
590 connecting opening
X-X, Y-Y longitudinal axes
V-V vertical axis
F-F filter axis

## Claims

1. An oil temperature regulator assembly (1) fluidly connectable to an oil circulation system of an operating vehicle group, for example a power group or a drive group or a gearbox group, and to a cooling system of said operating group or of said vehicle, wherein the oil temperature regulator assembly (1) identifies a vertical axis (V-V) and two longitudinal axes (X-X; Y-Y) lying mutually orthogonal to each other, wherein said assembly (1) comprises:
i) a heat exchanger (2) comprising, along said vertical axis (V-V), an upper exchanger plate (21), a plurality of intermediate exchanger plates (20), and a lower exchanger plate (22), wherein the stacking of said plates defines an oil flow zone and a cooling fluid flow zone comprising a plurality of planar oil flowing regions (40) and a plurality of planar fluid flowing regions (60), respectively, alternating with one another along the vertical axis (V-V) and comprising inlet and outlet vertical oil ducts (41, 42) and inlet and outlet vertical fluid ducts (61, 62) fluidly connected to the respective planar flowing regions (40, 60);
ii) a base device (3), engaged with the lower exchanger plate (22), comprising inlet and outlet oil connection mouths (31, 32) fluidly connected to the inlet and outlet vertical oil ducts (41, 42), respectively, adapted to fluidly connect the heat exchanger (2) to the vehicle operating group;
wherein the upper exchanger plate (21) or the base device (3) comprises an operating opening (27, 37) vertically aligned with a vertical oil duct (41, 42) and an oil circulation duct (29, 39), wherein the operating opening (27, 37) is connected to the oil circulation duct (29, 39) ;
wherein the oil temperature regulator assembly (1) further comprises:
iii) a filtering unit (5);
the oil temperature regulator assembly (1) is **characterized by** the fact that said filtering unit (5) extends along a filter axis (F-F) insertable as a cartridge, through the operating opening (27, 37), in the vertical oil duct (41, 42), wherein said filtering unit (5) comprises a filtering element (57) adapted to filter solid particles from the oil and wherein the filtering unit (5) comprises a connecting portion (59) adapted to be housed in the oil circulation duct (29, 39) comprising a connecting opening (590) through which the vertical oil duct, preferably the clean side, and the oil circulation duct (29, 39) are in fluid communication.

2. Oil temperature regulator assembly (1) according to claim 1, wherein the filtering element (57) extends in a tubular manner with respect to the filter axis (F-F), being adapted to carry out the filtration in radial direction, preferably from the outside to the inside, thus defining a dirty side and a clean side.

3. Oil temperature regulator assembly (1) according to any one of the preceding claims, wherein the filtering unit (5) comprises a filter end (58) which is distal from the operating opening (27, 37), transverse to the filter axis (F-F), wherein said filtering end (58) is closed or it comprises a filtering end (587) adapted to carry out the filtration in axial direction.

4. Oil temperature regulator assembly (1) according to any one of the claims 2 or 3, wherein the filtering element (57), and preferably the filtering end (587), comprises a mesh, preferably made of a synthetic material or a metal material, preferably having flow pores either equal to or smaller than 600 microns.

5. Oil temperature regulator assembly (1) according to any one of the preceding claims, wherein the filtering unit (5) crosses the oil circulation duct (29, 39) comprising a main sealing portion (56) which sealingly engages an inner portion of the vertical oil duct (41, 42) in which is housed, preferably the upper exchanger plate (21) or the lower exchanger plate (22).

6. Oil temperature regulator assembly (1) according to claim 5, wherein the connecting opening (590) is positioned radially to the filter axis (F-F).

7. Oil temperature regulator assembly (1) according to any one of the preceding claims, wherein the filtering unit (5) comprises an operating sealing portion (55) which sealingly engages the operating opening (27, 37).

8. Oil temperature regulator assembly (1) according to any one of the preceding claims, wherein the upper plate (21) or the base device (3) comprises a collar (270, 370) which vertically extends at the operating opening (37), wherein the filtering unit (5) comprises a fastening portion (54) adapted to engage and lock said collar (270, 370) .

9. Oil temperature regulator assembly (1) according to claim 8, wherein the oil temperature regulator assembly (1) also comprises a pin element (9) which is insertable in radial direction through the collar (270, 370) and the fastening portion (54).

10. Oil temperature regulator assembly (1) according to any one of the preceding claims, wherein the oil circulation duct (29, 39) comprises a main oil circulation duct (39) where the oil connection mouths (31, 32) are obtained in said main oil circulation duct (39), wherein the base device (3) comprises an auxiliary oil circulation duct (35), at least partially surrounded by the main oil circulation duct (39), wherein the auxiliary oil circulation duct (35) connects one vertical oil duct (41, 42) to one connection mouth (31, 32), and the main oil circulation duct (39) connects the other vertical oil duct (41, 42) to the other connection mouth (31, 32) so as to define a fluid inlet portion and a distinct fluid outlet portion inside the main circulation duct (39).

11. Oil temperature regulator assembly (1) according to claim 10, wherein the base device (3) comprises a lower plate-shaped base element (30) and an upper plate-shaped base element (34), vertically coupled, defining the main oil circulation duct (39) and the auxiliary oil circulation duct (35).

12. Oil temperature regulator assembly (1) according to claim 11, wherein the lower plate-shaped base element (30) comprises a main protrusion (38) in which the main oil circulation duct (39) is obtained, and wherein the upper plate-shaped base element (34) comprises an auxiliary protrusion (36) vertically adapted to house in the main oil circulation duct (39), preferably inside the main protrusion (38), identifying the auxiliary oil circulation duct (35).

13. Oil temperature regulator assembly (1) according to any one of the preceding claims, wherein the oil circulation duct (29, 39) comprises a bypass duct (29) obtained in the heat exchanger (2), fluidly connected to the vertical oil ducts (41, 42), where the oil flows bypassing the planar flowing regions (40) and through the filtering unit (5).

14. Oil temperature regulator assembly (1) according to claim 13, wherein the bypass duct (29) is at least partially defined in the upper exchanger plate (21) which comprises a bypass protrusion (28).

15. Oil temperature regulator assembly (1) according to any one of the preceding claims, wherein the base device (3) comprises specific fluid connection mouths adapted to connect the vertical fluid ducts.

## Patentansprüche

1. Öltemperaturregleranordnung (1), welche fluidisch mit einem Ölzirkulationssystem einer operativen Fahrzeuggruppe, zum Beispiel einer Leistungsgruppe oder einer Antriebsgruppe oder einer Getriebegruppe, und mit einem Kühlsystem der operativen Gruppe oder des Fahrzeugs verbindbar ist, wobei die Öltemperaturregleranordnung (1) eine vertikale Achse (V-V) und zwei longitudinale Achsen (X-X; Y-Y) identifiziert, welche gegenseitig orthogonal zueinander liegen, wobei die Anordnung (1) umfasst:
i) einen Wärmetauscher (2), welcher entlang der vertikalen Achse (V-V) eine obere Tauscherplatte (21), eine Mehrzahl von Zwischentauscherplatten (20) und eine untere Tauscherplatte (22) umfasst, wobei das Stapeln der Platten eine Ölströmungszone und eine Kühlfluidströmungszone definiert, welche eine Mehrzahl planarer Ölströmungsbereiche (40) bzw. eine Mehrzahl planarer Fluidströmungsbereiche (60) umfassen, die sich entlang der vertikalen Achse (V-V) einander abwechseln und vertikale Einlass- und Auslassölkanäle (41, 42) sowie vertikale Einlass- und Auslassfluidkanäle (61, 62) umfassen, welche fluidisch mit den jeweiligen planaren Strömungsbereichen (40, 60) verbunden sind;
ii) eine, mit der unteren Tauscherplatte (22) in Eingriff stehende, Basisvorrichtung (3), welche fluidisch mit den vertikalen Einlass- bzw. Auslassölkanälen (41, 42) verbundene Einlass- und Auslassölverbindungsmündungen (31, 32) umfasst, die derart angepasst sind, dass sie den Wärmetauscher (2) fluidisch mit der operativen Fahrzeuggruppe verbinden;
wobei die obere Tauscherplatte (21) oder die Basisvorrichtung (3) eine operative Öffnung (27, 37) umfasst, welche vertikal mit einem vertikalen Ölkanal (41, 42) und einem Ölzirkulationskanal (29, 39) ausgerichtet ist, wobei die operative Öffnung (27, 37) mit dem Ölzirkulationskanal (29, 39) verbunden ist;
wobei die Öltemperaturregleranordnung (1) ferner umfasst:
iii) eine Filtereinheit (5);
wobei die Öltemperaturregleranordnung (1) durch die Tatsache gekennzeichnet ist, dass sich die Filtereinheit (5) entlang einer Filterachse (F-F), einsetzbar als ein Einsatz, durch die operative Öffnung (27, 37) in den vertikalen Ölkanal (41, 42) erstreckt, wobei die Filtereinheit (5) ein Filterelement (57) umfasst, welches derart angepasst ist, dass es feste Partikel aus dem Öl filtert, und wobei die Filtereinheit (5) einen Verbindungsabschnitt (59) umfasst, welcher derart angepasst ist, dass er in dem Ölzirkulationskanal (29, 39) aufgenommen ist, und welcher eine Verbindungsöffnung (590) umfasst, durch welche der vertikale Ölkanal, vorzugsweise die saubere Seite, und der Ölzirkulationskanal (29, 39) in Fluidkommunikation stehen.

2. Öltemperaturregleranordnung (1) nach Anspruch 1, wobei sich das Filterelement (57) in Bezug auf die Filterachse (F-F) in einer rohrförmigen Weise erstreckt und derart angepasst ist, dass es die Filtration in einer radialen Richtung, vorzugsweise von dem Äußeren zu dem Inneren, durchführt, wodurch eine schmutzige Seite und eine saubere Seite definiert ist.

3. Öltemperaturregleranordnung (1) nach einem der vorhergehenden Ansprüche, wobei die Filtereinheit (5) ein zu der Filterachse (F-F) transversales Filterende (58) umfasst, welches distal von der operativen Öffnung (27, 37) ist, wobei das Filterende (58) geschlossen ist oder wobei sie ein Filterende (587) umfasst, welches derart angepasst ist, dass es die Filtration in einer axialen Richtung durchführt.

4. Öltemperaturregleranordnung (1) nach einem der Ansprüche 2 oder 3, wobei das Filterelement (57), und vorzugsweise das Filterende (587), ein Netz umfasst, welches vorzugsweise aus einem synthetischen Material oder einem Metallmaterial hergestellt ist und welches vorzugsweise Strömungsporen aufweist, welche entweder gleich wie oder kleiner als 600 Mikrometer sind.

5. Öltemperaturregleranordnung (1) nach einem der vorhergehenden Ansprüche, wobei die Filtereinheit (5) den Ölzirkulationskanal (29, 39) kreuzt, welcher einen Hauptdichtungsabschnitt (56) umfasst, der dichtend mit einem inneren Abschnitt des vertikalen Ölkanals (41, 42) in Eingriff tritt, in welchem vorzugsweise die obere Tauscherplatte (21) oder die untere Tauscherplatte (22) aufgenommen ist.

6. Öltemperaturregleranordnung (1) nach Anspruch 5, wobei die Verbindungsöffnung (590) radial zu der Filterachse (F-F) positioniert ist.

7. Öltemperaturregleranordnung (1) nach einem der vorhergehenden Ansprüche, wobei die Filtereinheit (5) einen operativen Dichtungsabschnitt (55) umfasst, welcher dichtend mit der operativen Öffnung (27, 37) in Eingriff tritt.

8. Öltemperaturregleranordnung (1) nach einem der vorhergehenden Ansprüche, wobei die obere Platte (21) oder die Basisvorrichtung (3) einen Kragen (270, 370) umfasst, welcher sich vertikal an der operativen Öffnung (37) erstreckt, wobei die Filtereinheit (5) einen Befestigungsabschnitt (54) umfasst, welcher derart angepasst ist, dass er mit dem Kragen (270, 370) in Eingriff tritt und ihn verriegelt.

9. Öltemperaturregleranordnung (1) nach Anspruch 8, wobei die
Öltemperaturregleranordnung (1) ebenfalls ein Stiftelement (9) umfasst, welches in einer radialen Richtung durch den Kragen (270, 370) und den Befestigungsabschnitt (54) einsetzbar ist.

10. Öltemperaturregleranordnung (1) nach einem der vorhergehenden Ansprüche, wobei der Ölzirkulationskanal (29, 39) einen Hauptölzirkulationskanal (39) umfasst, wobei die Ölverbindungsmündungen (31, 32) in dem Hauptölzirkulationskanal (39) erhalten sind, wobei die Basisvorrichtung (3) einen Hilfsölzirkulationskanal (35) umfasst, welcher wenigstens teilweise durch den Hauptölzirkulationskanal (39) umgeben ist, wobei der Hilfsölzirkulationskanal (35) einen vertikalen Ölkanal (41, 42) mit einer Verbindungsmündung (31, 32) verbindet und der Hauptölzirkulationskanal (39) den anderen vertikalen Ölkanal (41, 42) mit der anderen Verbindungsmündung (31, 32) verbindet, um innerhalb des Hauptölzirkulationskanals (39) einen Fluideinlassabschnitt und einen unterschiedlichen Fluidauslassabschnitt zu definieren.

11. Öltemperaturregleranordnung (1) nach Anspruch 10, wobei die Basisvorrichtung (3) ein unteres plattenförmiges Basiselement (30) und ein oberes plattenförmiges Basiselement (34) umfasst, welche vertikal gekoppelt sind und den Hauptölzirkulationskanal (39) sowie den Hilfsölzirkulationskanal (35) definieren.

12. Öltemperaturregleranordnung (1) nach Anspruch 11, wobei das untere plattenförmige Basiselement (30) einen Hauptvorsprung (38) umfasst, in welchem der Hauptölzirkulationskanal (39) erhalten ist, und wobei das obere plattenförmige Basiselement (34) einen Hilfsvorsprung (36) umfasst, welcher vertikal derart angepasst ist, dass er in dem Hauptölzirkulationskanal (39), vorzugsweise innerhalb des Hauptvorsprungs (38), aufgenommen ist und den Hilfsölzirkulationskanal (35) definiert.

13. Öltemperaturregleranordnung (1) nach einem der vorhergehenden Ansprüche, wobei der Ölzirkulationskanal (29, 39) einen in dem Wärmetauscher (2) erhaltenen, fluidisch mit den vertikalen Ölkanälen (41, 42) verbundenen Bypass-Kanal (29) umfasst, in welchem das Öl die planaren Strömungsbereiche (40) umgehend und durch die Filtereinheit (5) strömt.

14. Öltemperaturregleranordnung (1) nach Anspruch 13, wobei der Bypass-Kanal (29) wenigstens teilweise in der oberen Tauscherplatte (21) definiert ist, welche einen Bypass-Vorsprung (28) umfasst.

15. Öltemperaturregleranordnung (1) nach einem der vorhergehenden Ansprüche, wobei die Basisvorrichtung (3) spezifische Fluidverbindungsmündungen umfasst, welche derart angepasst sind, dass sie die vertikalen Fluidkanäle verbinden.

## Revendications

1. Ensemble de régulation de température d'huile (1) pouvant être raccordé de manière fluidique à un système de circulation d'huile d'un groupe fonctionnel de véhicule, par exemple un groupe de puissance ou un groupe d'entraînement ou un groupe de transmission, et à un système de refroidissement dudit groupe fonctionnel ou dudit véhicule, dans lequel l'ensemble de régulation de température d'huile (1) identifie un axe vertical (V-V) et deux axes longitudinaux (X-X ; Y-Y) reposant de manière mutuellement orthogonale l'un par rapport à l'autre, dans lequel ledit ensemble (1) comprend :
i) un échangeur de chaleur (2) comprenant, le long dudit axe vertical (V-V), une plaque supérieure d'échangeur (21), une pluralité de plaques intermédiaires d'échangeur (20) et une plaque inférieure d'échangeur (22), où l'empilement desdites plaques définit une zone d'écoulement d'huile et une zone d'écoulement de fluide de refroidissement comprenant une pluralité de régions planes d'écoulement d'huile (40) et une pluralité de régions planes d'écoulement de fluide (60), respectivement, alternant les unes avec les autres le long de l'axe vertical (V-V) et comprenant des conduits verticaux d'entrée et de sortie d'huile (41, 42) et des conduits verticaux d'entrée et de sortie de fluide (61, 62) raccordés de manière fluidique aux régions planes d'écoulement respectives (40, 60) ;
ii) un dispositif de base (3), en prise avec la plaque inférieure d'échangeur (22), comprenant des bouches de raccordement d'entrée et de sortie d'huile (31, 32) raccordées de manière fluidique aux conduits verticaux d'entrée et de sortie d'huile (41, 42), respectivement, adapté pour raccorder de manière fluidique l'échangeur de chaleur (2) au groupe fonctionnel de véhicule ;
dans lequel la plaque supérieure d'échangeur (21) ou le dispositif de base (3) comprend une ouverture fonctionnelle (27, 37) verticalement alignée avec un conduit vertical d'huile (41, 42) et un conduit de circulation d'huile (29, 39), dans lequel l'ouverture fonctionnelle (27, 37) est raccordée au conduit de circulation d'huile (29, 39) ;
dans lequel l'ensemble de régulation de température d'huile (1) comprend en outre :
iii) une unité filtrante (5) ;
l'ensemble de régulation de température d'huile (1) est **caractérisé par le fait que** ladite unité filtrante (5) s'étend le long d'un axe de filtre (F-F) insérable sous la forme d'une cartouche, à travers l'ouverture fonctionnelle (27, 37), dans le conduit vertical d'huile (41, 42), ladite unité filtrante (5) comprenant un élément filtrant (57) adapté pour filtrer des particules solides de l'huile, et l'unité filtrante (5) comprenant une partie de raccordement (59) adaptée pour être logée dans le conduit de circulation d'huile (29, 39) et comprenant une ouverture de raccordement (590) à travers laquelle le conduit vertical d'huile, de préférence le côté propre, et le conduit de circulation d'huile (29, 39) sont en communication fluidique.

2. Ensemble de régulation de température d'huile (1) selon la revendication 1, dans lequel l'élément filtrant (57) s'étend à la manière d'un tube par rapport à l'axe de filtre (F-F), étant adapté pour réaliser la filtration dans une direction radiale, de préférence de l'extérieur vers l'intérieur, définissant ainsi un côté sale et un côté propre.

3. Ensemble de régulation de température d'huile (1) selon l'une quelconque des revendications précédentes, dans lequel l'unité filtrante (5) comprend une extrémité de filtre (58) qui est distale par rapport à l'ouverture fonctionnelle (27, 37), transversale à l'axe de filtre (F-F), ladite extrémité de filtre (58) étant fermée ou comprenant une extrémité filtrante (587) adaptée pour effectuer la filtration dans une direction axiale.

4. Ensemble de régulation de température d'huile (1) selon l'une quelconque des revendications 2 ou 3, dans lequel l'élément filtrant (57) et, de préférence, l'extrémité filtrante (587), comprend un tamis, de préférence fait d'une matière synthétique ou d'une matière métallique, de préférence présentant des pores d'écoulement de taille inférieure ou égale à 600 microns.

5. Ensemble de régulation de température d'huile (1) selon l'une quelconque des revendications précédentes, dans lequel l'unité filtrante (5) traverse le conduit de circulation d'huile (29, 39), comprenant une partie d'étanchéité principale (56) qui entre en prise de manière étanche avec une partie interne du conduit d'huile vertical (41, 42) dans lequel est logée de préférence la plaque supérieure d'échangeur (21) ou la plaque inférieure d'échangeur (22).

6. Ensemble de régulation de température d'huile (1) selon la revendication 5, dans lequel l'ouverture de raccordement (590) est positionnée radialement par rapport à l'axe de filtre (F-F).

7. Ensemble de régulation de température d'huile (1) selon l'une quelconque des revendications précédentes, dans lequel l'unité filtrante (5) comprend une partie d'étanchéité fonctionnelle (55) qui entre en prise de manière étanche avec l'ouverture fonctionnelle (27, 37).

8. Ensemble de régulation de température d'huile (1) selon l'une quelconque des revendications précédentes, dans lequel la plaque supérieure (21) ou le dispositif de base (3) comprend un collier (270, 370) qui s'étend verticalement au niveau de l'ouverture fonctionnelle (37), dans lequel l'unité filtrante (5) comprend une partie de fixation (54) adaptée pour entrer en prise avec et bloquer ledit collier (270, 370).

9. Ensemble de régulation de température d'huile (1) selon la revendication 8, dans lequel l'ensemble de régulation de température d'huile (1) comprend également un élément de broche (9) qui peut être inséré dans une direction radiale à travers le collier (270, 370) et la partie de fixation (54).

10. Ensemble de régulation de température d'huile (1) selon l'une quelconque des revendications précédentes, dans lequel le conduit de circulation d'huile (29, 39) comprend un conduit principal de circulation d'huile (39), où les bouches de raccordement d'huile (31, 32) sont obtenues dans ledit conduit principal de circulation d'huile (39), dans lequel le dispositif de base (3) comprend un conduit auxiliaire de circulation d'huile (35), au moins partiellement entouré par le conduit principal de circulation d'huile (39), dans lequel le conduit auxiliaire de circulation d'huile (35) raccorde un conduit vertical d'huile (41, 42) à une bouche de raccordement (31, 32) et le conduit principal de circulation d'huile (39) raccorde l'autre conduit vertical d'huile (41, 42) à l'autre bouche de raccordement (31, 32) de façon à définir une partie d'entrée de fluide et une partie distincte de sortie de fluide à l'intérieur du conduit principal de circulation (39).

11. Ensemble de régulation de température d'huile (1) selon la revendication 10, dans lequel le dispositif de base (3) comprend un élément de base inférieur en forme de plaque (30) et un élément de base supérieur en forme de plaque (34), verticalement reliés, définissant le conduit principal de circulation d'huile (39) et le conduit auxiliaire de circulation d'huile (35).

12. Ensemble de régulation de température d'huile (1) selon la revendication 11, dans lequel l'élément de base inférieur en forme de plaque (30) comprend une saillie principale (38) dans laquelle est obtenu le conduit principal de circulation d'huile (39), et dans lequel l'élément de base supérieur en forme de plaque (34) comprend une saillie auxiliaire (36) verticalement adaptée pour se loger dans le conduit principal de circulation d'huile (39), de préférence à l'intérieur de la saillie principale (38), identifiant le conduit auxiliaire de circulation d'huile (35).

13. Ensemble de régulation de température d'huile (1) selon l'une quelconque des revendications précédentes, dans lequel le conduit de circulation d'huile (29, 39) comprend un conduit de dérivation (29) obtenu dans l'échangeur de chaleur (2), raccordé de manière fluidique aux conduits verticaux d'huile (41, 42), où l'huile s'écoule en évitant les régions d'écoulement planes (40) et à travers l'unité filtrante (5).

14. Ensemble de régulation de température d'huile (1) selon la revendication 13, dans lequel le conduit de dérivation (29) est au moins partiellement défini dans la plaque supérieure d'échangeur (21) qui comprend une saillie de dérivation (28).

15. Ensemble de régulation de température d'huile (1) selon l'une quelconque des revendications précédentes, dans lequel le dispositif de base (3) comprend des bouches de raccordement de fluide spécifiques adaptées pour raccorder les conduits verticaux de fluide.
